Europäisches Patentamt

European Patent Office

Office européen des brevets

(19)

(11) EP 1 106 980 A1

## (12) DEMANDE DE BREVET EUROPEEN

(43) Date de publication:
**13.06.2001 Bulletin 2001/24**

(51) Int Cl.⁷: **G01J 5/20**, G01J 5/10

(21) Numéro de dépôt: 00403434.4

(22) Date de dépôt: **07.12.2000**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **10.12.1999 FR 9915596**

(71) Demandeur: **COMMISSARIAT A L'ENERGIE ATOMIQUE**
**75015 Paris Cédex 15 (FR)**

(72) Inventeurs:
• **Yon, Jean-Jacques**
**38360 Sassenage (FR)**
• **Perez, André**
**38710 Cordeac (FR)**
• **Vedel, Corine**
**38660 Lumbin (FR)**

(74) Mandataire: **Des Termes, Monique**
**Société Brevatome**
**3, rue du Docteur Lancereaux**
**75008 Paris (FR)**

### (54) Dispositif de détection de rayonnement électromagnétique

(57) L'invention concerne un dispositif de détection de rayonnement électromagnétique comprenant au moins deux détecteurs élémentaires (Dij), chaque détecteur élémentaire (Dij) comprenant une première borne conductrice (pija) et une deuxième borne conductrice (pijb) pour prélever un signal électrique représentatif du rayonnement détecté. Le dispositif de détection comprend des premiers moyens (Iija) pour connecter ou déconnecter une première borne conductrice du détecteur élémentaire (pija) à une première borne d'entrée d'un circuit de traitement et des seconds moyens (Iijb) pour connecter ou déconnecter une deuxième borne conductrice (pijb) du détecteur (Dij) à une deuxième borne d'entrée du circuit de traitement (Tj).

L'invention s'applique plus particulièrement à la détection thermique de rayonnement électromagnétique.

FIG. 4

## Description

Domaine technique et art antérieur

L'invention concerne un dispositif de détection de rayonnement électromagnétique.

Plus particulièrement, l'invention concerne un dispositif de détection de rayonnement électromagnétique comprenant au moins deux détecteurs élémentaires.

L'invention trouve une application particulièrement avantageuse dans le cas où les détecteurs élémentaires sont des détecteurs thermiques à micro-pont.

Un détecteur de rayonnement électromagnétique basé sur le principe de la détection thermique est généralement constitué de différents sous-ensembles qui réalisent quatre fonctions essentielles à la détection d'un rayonnement, à savoir une fonction d'absorption du rayonnement, une fonction de mesure de température, une fonction d'isolation thermique et une fonction de traitement du signal.

La fonction d'absorption permet de convertir l'énergie de l'onde électromagnétique incidente qui est caractéristique de la scène observée en un échauffement d'une structure de détection. Les paramètres qui caractérisent cette fonction sont, d'une part, l'absorption relative Ar qui définit le rapport de la luminance du rayonnement incident à la luminance effectivement absorbée par la structure absorbante et, d'autre part, le facteur de remplissage Fr qui est le rapport de la surface utile participant effectivement à l'échauffement du détecteur à la surface totale de celui-ci.

L'optimisation de la fonction d'absorption consiste donc essentiellement à rendre maximaux les paramètres Ar et Fr.

La fonction de mesure de température est réalisée par un thermomètre. Le thermomètre est un élément dont une caractéristique électrique est sensible à la température. La caractéristique physique de l'élément peut être la résistivité électrique du matériau dans le cas d'un bolomètre résistif, la conductivité électrique pour un dispositif à semiconducteur, la polarisation résiduelle dans le cas d'un détecteur pyroélectrique, la constante diélectrique dans le cas d'un détecteur ferroélectrique, etc..

Les facteurs de qualité essentiels qui caractérisent la fonction de thermomètre sont, d'une part, la variation relative de la grandeur physique observée avec la température, et d'autre part, le bruit électronique qui se superpose au signal électrique utile du thermomètre.

La variation relative de la grandeur physique observée avec la température est quantifiée par un coefficient de température généralement noté TC. Pour un bolomètre résistif de résistance R, le coefficient TC s'exprime par TC = $\frac{\Delta R}{R \Delta T}$ où $\Delta$R est la variation de la résistance R sur l'intervalle de température $\Delta$T. Selon le formalisme établi par Hooge, le bruit électronique contient une contribution basse fréquence, dit bruit en 1/f, dont l'amplitude est inversement proportionnelle au volume du matériau utilisé pour réaliser le thermomètre.

L'optimisation du thermomètre consiste à rendre maximal le coefficient TC et minimal le bruit en 1/f, ce qui a généralement pour conséquence d'augmenter le volume du thermomètre.

La fonction d'isolation thermique est réalisée, par exemple, en disposant la structure absorbante et le thermomètre sur une membrane suspendue au-dessus d'un substrat, selon une structure communément appelée micro-pont. Une telle structure permet de minimiser les liens mécaniques qui sont à l'origine des fuites thermiques entre le micro-pont et le substrat.

Ces liens mécaniques sont constitués, d'une part, d'un dispositif de maintien mécanique de la membrane et, d'autre part, d'un dispositif d'isolation thermique. En général, ces liens mécaniques permettent aussi de supporter les interconnexions électriques du thermomètre.

Les paramètres qui caractérisent la fonction d'isolation thermique du détecteur sont, d'une part, l'isolation thermique Rth qu'il faut rendre maximale afin d'améliorer la sensibilité du détecteur et, d'autre part, la capacité calorifique Cth constituée par le volume du thermomètre associé au volume de l'élément absorbant.

La capacité calorifique Cth traduit l'inertie thermique du détecteur. Afin de réaliser un détecteur sensible et rapide, il faut à la fois accroître l'isolation thermique et réduire le volume du thermomètre. Une telle optimisation peut être réalisée par une structure en couches minces.

La fonction de traitement du signal consiste à convertir le signal électrique délivré par le thermomètre en un signal compatible du système d'exploitation tel que, par exemple, une caméra. Dans le cas de barrettes ou de matrices de détecteurs, la fonction de traitement est généralement réalisée par un circuit électronique qui isole et amplifie le signal électrique issu de chaque thermomètre et délivre un signal vidéo à partir des signaux individuels ; il est alors essentiel que les informations issues des différents détecteurs ne se mélangent pas.

Dans la plupart des applications, la fonction de traitement est réalisée par un circuit positionné directement sous le détecteur afin de ne pas dégrader le facteur de remplissage du composant. Pour ce faire, il est connu de mettre en oeuvre les techniques d'hybridation par billes métalliques ou les technologies monolithiques connues de l'homme de l'art sous la dénomination "above IC" (l'expression "above IC" est une expression anglo-saxonne signifiant "sur Circuit Intégré").

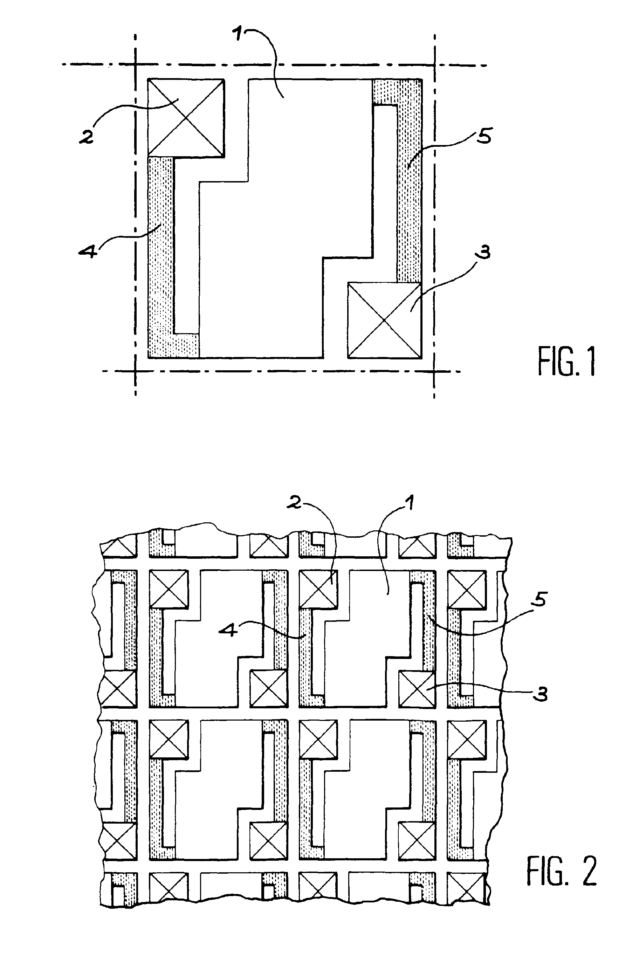

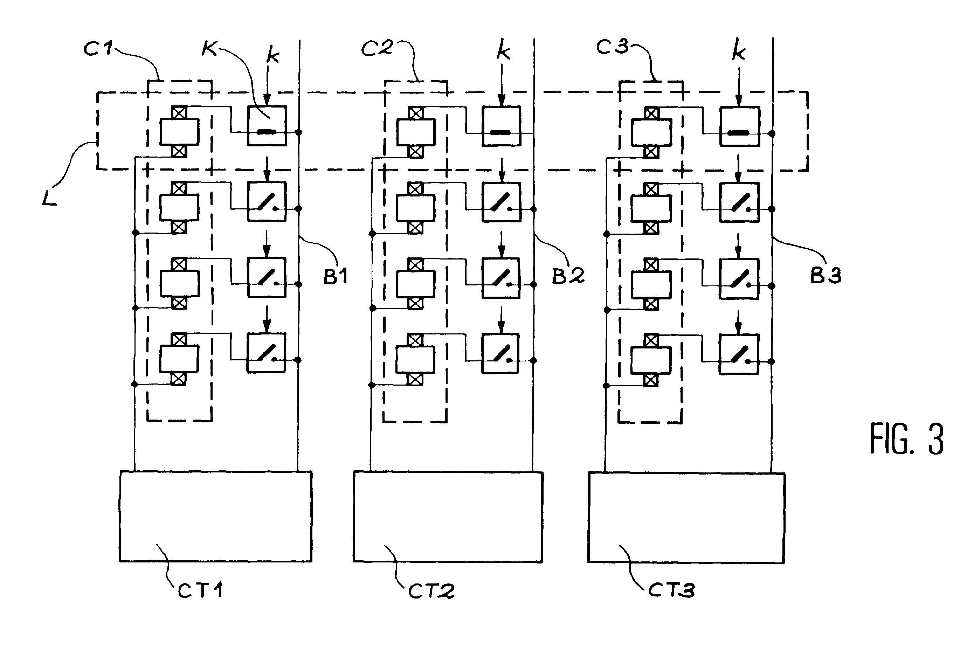

Les figures 1 et 2 représentent schématiquement une implantation géométrique des différentes fonctions nécessaires à la détection thermique d'une onde électromagnétique. La figure 1 représente une vue de dessus d'un détecteur thermique élémentaire et la figure 2 représente une vue de dessus d'un bloc de quatre détecteurs thermiques élémentaires d'un détecteur thermique à structure matricielle.

La zone 1 représente la localisation de l'élément absorbant et du thermomètre. La zone 1 correspond à la zone active du détecteur qui collecte effectivement l'onde incidente.

Les zones 2 et 3 localisent des éléments de maintien mécanique et d'interconnexion électrique vers le circuit de traitement du détecteur élémentaire. Les zones 4 et 5 localisent les dispositifs d'isolation thermique du détecteur.

Les zones 2, 3, 4 et 5 ne participent pas à la détection et, en conséquence, réduisent la place disponible pour la réalisation de l'élément absorbant et du thermomètre, ce qui est pénalisant en termes de facteur de remplissage et de bruit en 1/f du thermomètre.

Différents types de détecteurs thermiques sont connus de l'art antérieur.

La demande de brevet européen EP-O 354 369 décrit, ainsi, un réseau de détecteurs infrarouges monolithiques non refroidis constitués de bolomètres fabriqués sur un substrat en silicium. Les bolomètres sont constitués d'un empilement de couches minces d'oxyde de silicium, de nitrure de titane, de silicium amorphe hydrogéné, de nitrure de titane et d'oxyde de silicium. Le nitrure de titane forme l'absorbant infrarouge et les contacts de résistance, et le silicium amorphe la résistance avec un coefficient en température élevé. La résistance est suspendue au-dessus du substrat en silicium par des interconnexions métalliques et le circuit de traitement associé est réalisé dans le substrat en silicium audessous de la résistance.

Les brevets US-5 367 167 et US-5 672 903 divulguent des détecteurs de rayonnement infrarouge à micro-pont. Les dispositifs de maintien mécanique et d'interconnexion électrique des micro-ponts sont très volumineux et de conception complexe.

Une interconnexion électrique attachée sur un plot métallique en liaison avec le substrat doit en effet être mise en contact avec le détecteur par l'intermédiaire d'une ouverture de contact réalisée dans le micropont.

Une telle structure conduit à des facteurs de remplissage relativement faibles. De plus, comme cela apparaît sur les figures 1 et 2, le facteur de remplissage est d'autant plus faible qu'il est nécessaire de disposer au moins deux zones (référencées 2 et 3 sur les figures 1 et 2) par détecteur élémentaire afin de permettre la circulation d'un courant électrique entre les deux bornes du détecteur.

Le brevet français déposé le 8 août 1996 et publié sous le n° 2 752 299 divulgue une construction particulière permettant de réduire le volume occupé par les dispositifs de maintien mécanique et d'interconnexion électrique. Un dispositif de maintien mécanique et d'interconnexion électrique est ici réalisé par dépôt et gravure d'au moins un matériau conducteur de façon à constituer un pilier qui relie directement l'électrode du détecteur et le circuit de traitement. Un détecteur élémentaire comprend deux dispositifs de maintien. Il est donc nécessaire de réaliser deux piliers par détecteur élémentaire.

Selon l'art antérieur, il est connu d'utiliser un circuit de traitement sous la forme d'une architecture série ou sous la forme d'une architecture parallèle. Dans un circuit de traitement sous la forme d'une architecture série, les détecteurs sont lus les uns après les autres, de façon séquentielle, par un unique dispositif de lecture. Dans un circuit de traitement sous la forme d'une architecture parallèle, les détecteurs sont regroupés par paquet et les détecteurs d'un paquet sont lus simultanément par autant de dispositifs de lecture qu'il y a de détecteurs par paquet.

Un exemple de circuit de traitement sous la forme d'une architecture parallèle est représenté à la figure 3. Le détecteur représenté en figure 3 est composé de 12 détecteurs élémentaires agencés sous la forme d'une matrice de 4 lignes et 3 colonnes. Chaque détecteur élémentaire d'une même colonne $C_j$ (j=1, 2, 3) a une première borne reliée à une première borne d'un interrupteur K dont la deuxième borne est reliée, par un bus colonne $B_j$, à une première entrée d'un circuit de traitement $CT_j$. Les deuxièmes bornes des détecteurs élémentaires d'une même colonne sont reliées entre elles et à une deuxième entrée du circuit de traitement $CT_j$. La deuxième borne des différents circuits de traitement $CT_j$ constitue une référence électrique, par exemple la masse du dispositif de détection. La lecture des détecteurs élémentaires s'effectue ligne par ligne, par application d'un signal de commande k aux interrupteurs d'une même ligne. Une telle structure comprend des détecteurs élémentaires tels que ceux représentés en figure 1. Comme mentionné précédemment, une telle structure est donc pénalisante en termes de facteur de remplissage et de bruit en 1/f.

L'invention ne présente pas les inconvénients des détecteurs de l'art antérieur mentionnés ci-dessus.

En effet, l'invention concerne un dispositif de détection de rayonnement électromagnétique comprenant au moins deux détecteurs élémentaires, chaque détecteur élémentaire comprenant une première borne conductrice et une deuxième borne conductrice pour prélever un signal électrique représentatif du rayonnement détecté, le dispositif de détection comprenant des moyens de connexion électrique pour relier la première borne et la deuxième borne d'un détecteur élémentaire à un circuit de traitement du signal électrique. Les moyens de connexion électrique comprennent des premiers moyens pour connecter ou déconnecter la première borne du détecteur élémentaire à une première borne d'entrée du circuit de traitement et des seconds moyens pour connecter ou déconnecter la deuxième borne du détecteur élémentaire à une deuxième borne d'entrée du circuit de traitement.

Avantageusement, les premiers et seconds moyens permettent un isolement électrique complet de chaque détecteur élémentaire.

Il est alors possible de réaliser des dispositifs de maintien et d'interconnexion électrique des micro-ponts communs à plusieurs détecteurs élémentaires. Quand le circuit de traitement recueille le signal électrique délivré par un premier détecteur élémentaire, ce premier détecteur est alors électriquement isolé des autres détecteurs qui partagent avec lui les mêmes dispositifs de maintien mécanique et d'interconnexion électrique. Avantageusement, aucun mélange des signaux issus des détecteurs qui partagent les mêmes dispositifs de maintien mécanique et d'interconnexion électrique n'apparaît.

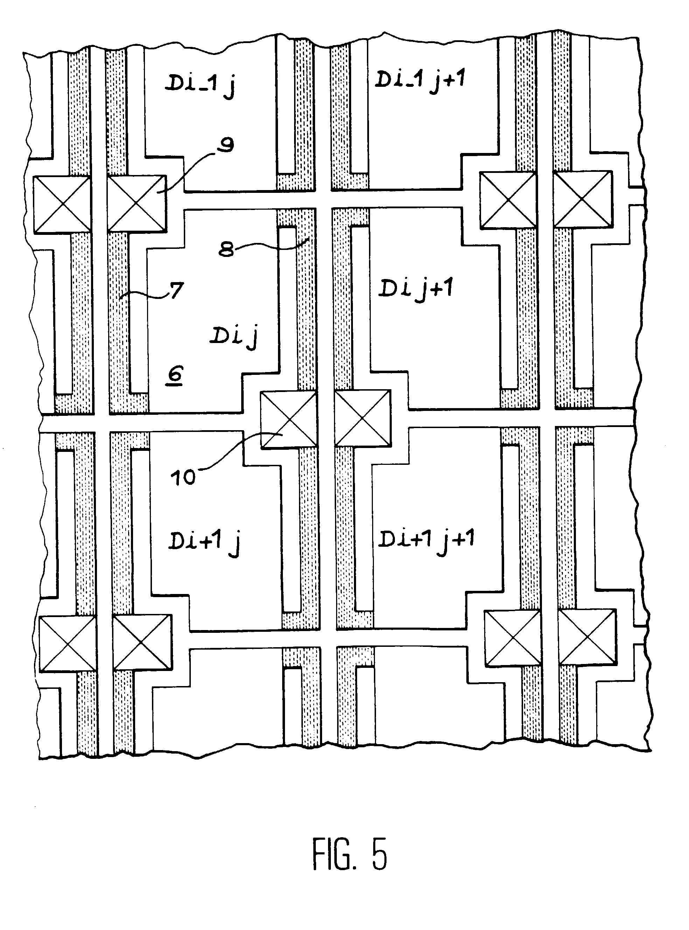

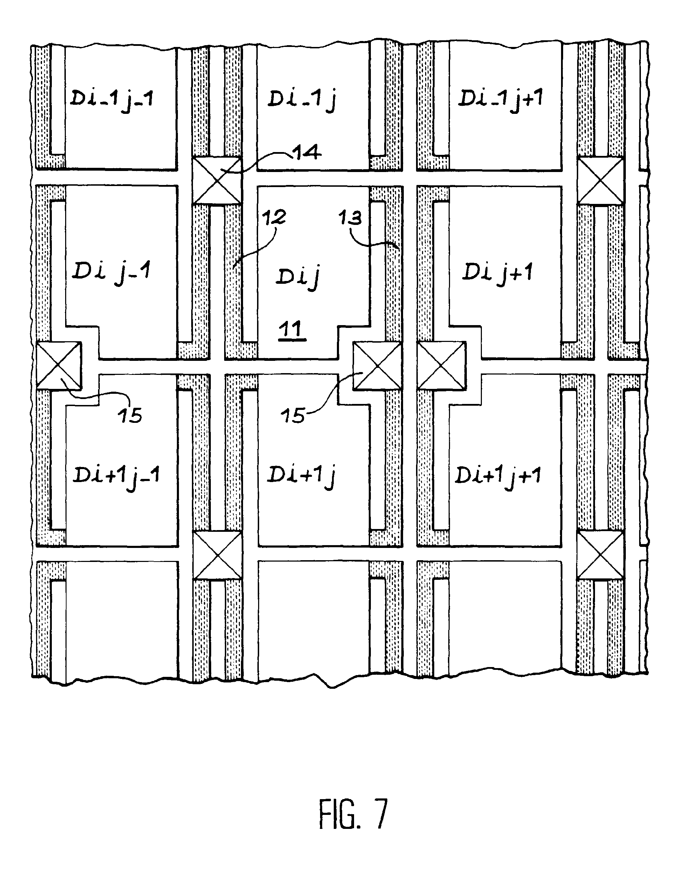

La surface nécessaire à la réalisation des dispositifs de maintien mécanique et d'interconnexion électrique peut être alors réduite en proportion du nombre de détecteurs qui partagent ces dispositifs. Ce gain de place peut, par exemple, être mis à profit pour allonger les dispositifs d'isolation thermique comme cela sera décrit ultérieurement (cf. figures 5 et 7). Le gain de place permet également d'augmenter la surface réservée à l'élément absorbant et au thermomètre.

En augmentant la surface occupée par l'élément absorbant, le facteur de remplissage s'accroît. La sensibilité du détecteur s'en trouve très sensiblement améliorée.

De même, en augmentant la surface occupée par le thermomètre, d'une part, on réduit l'amplitude du bruit en 1/f (ce qui augmente en proportion le rapport signal sur bruit) et, d'autre part, on relâche les contraintes de dessin du thermomètre, favorisant ainsi son optimisation.

La mise en commun des dispositifs de maintien mécanique et d'interconnexion électrique favorise, par ailleurs, une symétrie axiale des dispositifs de détection qui se présentent sous forme de matrices de détecteurs élémentaires. Une telle symétrie axiale favorise la tenue mécanique des micro-ponts ainsi que l'optimisation des règles pour le dessin de l'élément absorbant et du thermomètre.

Brève description des figures

D'autres caractéristiques et avantages de l'invention apparaîtront à la lecture d'un mode de réalisation préférentiel de l'invention fait en référence aux figures ci-annexées parmi lesquelles :

- La figure 1 représente une vue de dessus d'un détecteur thermique élémentaire selon l'art antérieur,
- la figure 2 représente une vue de dessus d'un bloc de quatre détecteurs thermiques élémentaires d'un détecteur thermique à structure matricielle selon l'art antérieur,
- la figure 3 représente un détecteur thermique à structure matricielle selon l'art antérieur,
- la figure 4 représente un schéma électrique de détecteur thermique à structure matricielle selon un premier mode de réalisation de l'invention,

- la figure 5 représente une vue de dessus d'un bloc de six détecteurs thermiques élémentaires d'un détecteur thermique à structure matricielle selon le premier mode de réalisation de l'invention,
- la figure 6 représente un schéma électrique de détecteur thermique à structure matricielle selon un deuxième mode de réalisation de l'invention,
- la figure 7 représente une vue de dessus d'un bloc de six détecteurs thermiques élémentaires d'un détecteur thermique à structure matricielle selon le deuxième mode de réalisation de l'invention,
- la figure 8 représente un schéma électrique d'un premier exemple de détecteur thermique selon le deuxième mode de réalisation de l'invention,
- la figure 9 représente un schéma électrique d'une première variante de détecteur thermique selon le deuxième mode de réalisation de l'invention,
- la figure 10 représente un schéma électrique d'une deuxième variante de détecteur thermique selon le deuxième mode de réalisation de l'invention.

Description détaillée de modes de mise en oeuvre de l'invention

Sur toutes les figures, les mêmes repères désignent les mêmes éléments.

Les figures 1, 2 et 3 ont été décrites précédemment, il est donc inutile d'y revenir.

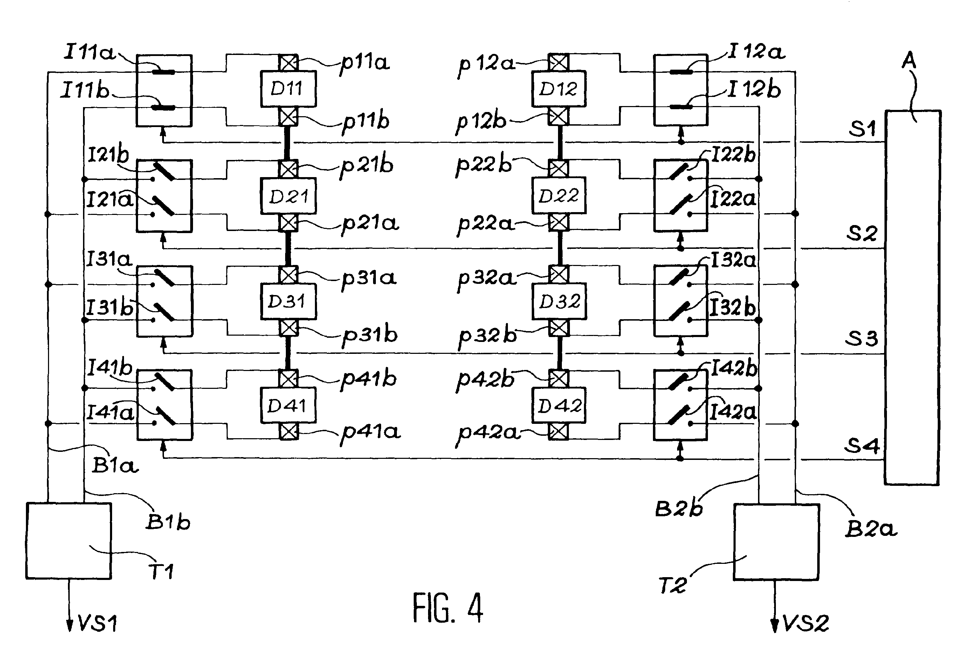

La figure 4 représente un schéma électrique de détecteur thermique à structure matricielle selon un premier mode de réalisation de l'invention.

A titre d'exemple non limitatif, le détecteur thermique de la figure 4 comprend 8 détecteurs élémentaires sous la forme d'une matrice de 4 lignes et 2 colonnes. De façon générale, l'invention concerne cependant un détecteur thermique de N x M détecteurs élémentaires agencés sous la forme d'une matrice de N lignes et M colonnes, M et N étant des nombres entiers. Chaque détecteur Dij (i=1,...,N et j=1,..., M) comprend une première borne conductrice pija et une deuxième borne conductrice pijb pour prélever le signal électrique susceptible d'être délivré par le détecteur.

Selon l'invention, la première borne conductrice pija est reliée à une première borne d'un premier interrupteur Iija dont la deuxième borne est reliée à un premier bus colonne Bja et la deuxième borne conductrice pijb est reliée à une première borne d'un deuxième interrupteur Iijb dont la deuxième borne est reliée à un deuxième bus colonne Bjb.

Chaque bus colonne Bja qui relie l'ensemble des deuxièmes bornes des interrupteurs Iija de la colonne de rang j est relié à une première borne d'entrée d'un circuit de traitement Tj. Chaque bus colonne Bjb qui relie l'ensemble des deuxièmes bornes des interrupteurs Iijb de la colonne de rang j est relié à une deuxième borne d'entrée du circuit de traitement Tj. La deuxième borne d'entrée du circuit de traitement Tj est une borne de référence électrique telle que, par exemple, la masse du détecteur thermique. Le circuit de traitement Tj délivre un signal de sortie VSj.

Les bornes conductrices pija et pijb du détecteur Dij sont respectivement reliées à la borne conductrice pi+1ja du détecteur Di+1j et à la borne pi-1jb du détecteur Di-1j.

Un dispositif d'adressage A applique simultanément aux interrupteurs Iija et Iijb de la ligne de rang i un même signal de commande Si. Tous les interrupteurs associés aux détecteurs élémentaires d'une même ligne sont alors commandés par le signal Si.

Le fonctionnement du dispositif de détection est basé sur le principe d'une lecture à balayage qui procède à la mesure simultanée des détecteurs thermiques élémentaires d'une même ligne.

Les différentes lignes sont lues préférentiellement de manière séquentielle. A titre d'exemple non limitatif, la figure 4 représente une configuration pour laquelle la première ligne est en lecture.

Comme cela a été mentionné précédemment, les bornes conductrices pija et pijb du détecteur Dij sont respectivement reliées à la borne conductrice pi+1ja du détecteur Di+1j et à la borne conductrice pi-1jb du détecteur Di-1j. Avantageusement, la borne conductrice pija du détecteur Dij peut alors être confondue avec la borne conductrice pi+1ja du détecteur Di+1j et la borne conductrice pijb du détecteur Dij peut être confondue avec la borne conductrice pi-1jb du détecteur Di-1j.

Selon le mode de réalisation préférentiel de l'invention, un détecteur élémentaire est un détecteur thermique comprenant un micro-pont et un dispositif de maintien du micro-pont. Le dispositif de maintien du micro-pont comprend un premier élément de maintien sur lequel est disposée la première borne conductrice pija et un deuxième élément de maintien sur lequel est disposée la deuxième borne conductrice pijb.

Selon le mode de réalisation représenté en figure 4, les détecteurs d'une même colonne sont agencés de façon que deux détecteurs voisins d'une même colonne partagent un même élément de maintien et une même borne conductrice, l'élément de maintien commun partagé par deux détecteurs voisins étant alternativement soit le premier élément de maintien, soit le deuxième élément de maintien.

La surface nécessaire à la réalisation des dispositifs de maintien mécanique et d'interconnexion électrique de l'ensemble du dispositif de détection selon l'invention est alors sensiblement diminuée de moitié par rapport à la surface nécessaire pour un dispositif selon l'art antérieur. La performance du détecteur en est donc améliorée.

A titre d'exemple, la figure 5 représente une vue de dessus d'un bloc de six détecteurs thermiques élémentaires de la structure matricielle selon la figure 4.

Chaque détecteur thermique élémentaire à micro-pont Dij est constitué d'une zone 6 où sont implantés l'élément absorbant et le thermomètre, de deux zones 7 et 8 d'isolation thermique et de deux zones 9 et 10 qui localisent chacune un dispositif de maintien mécanique et d'interconnexion électrique. La zone 9 localise le dispositif de maintien mécanique et d'interconnexion électrique commun aux détecteurs Dij et Di-1j et la zone 10 localise le dispositif de maintien mécanique et d'interconnexion électrique commun aux détecteurs Dij et Di+1j.

Les détecteurs élémentaires voisins situés sur une même colonne se déduisent les uns des autres par symétrie d'ordre 2 par rapport à un axe perpendiculaire à l'axe défini par la colonne. Avantageusement, il est alors possible de réaliser des dispositifs d'isolation thermique 8 de même longueur pour chaque détecteur.

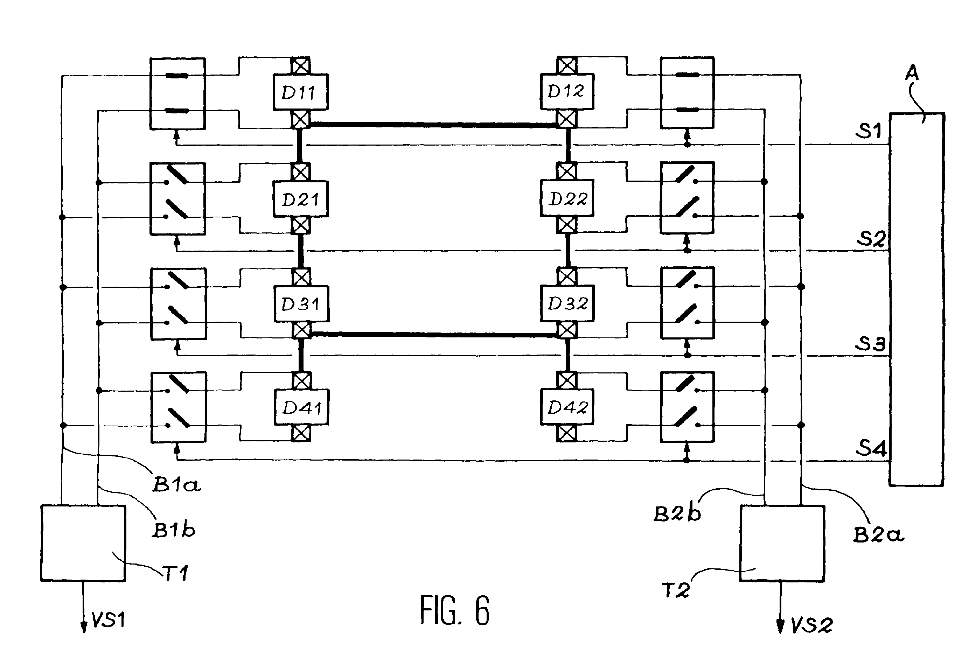

La figure 6 représente un schéma électrique de détecteur thermique à structure matricielle selon un deuxième mode de réalisation de l'invention.

De même que précédemment, le détecteur thermique de la figure 6 comprend, à titre d'exemple non limitatif, 8 détecteurs élémentaires sous la forme d'une matrice de 4 lignes et 2 colonnes. De façon générale, le deuxième mode de réalisation de l'invention concerne également un détecteur thermique de N x M détecteurs élémentaires agencés sous la forme d'une matrice de N lignes et M colonnes, M et N étant des nombres entiers.

Le dispositif de la figure 6 comprend les mêmes éléments que ceux qui composent le dispositif décrit en figure 4. Selon le mode de réalisation représenté en figure 6, les bornes conductrices p11b, p12b, p21b et p22b des détecteurs respectifs D11, D12, D21 et D22 sont reliées entre elles et les bornes conductrices p31b, p32b, p41b et p42b des détecteurs respectifs D31, D32, D41 et D42 sont reliées entre elles.

Selon le mode de réalisation préférentiel de l'invention pour lequel un détecteur élémentaire est un détecteur thermique tel que mentionné ci-dessus, le deuxième élément de maintien commun de deux détecteurs voisins d'une colonne de rang impair j est commun avec le deuxième élément de maintien commun de deux détecteurs voisins de la colonne de rang pair j+1.

A titre d'illustration, la figure 7 représente une vue de dessus d'un bloc de 6 détecteurs thermiques élémentaires de la structure matricielle selon la figure 6.

Chaque détecteur thermique élémentaire à micro-pont Dij est constitué d'une zone 11 où sont implantés l'élément absorbant et le thermomètre, de deux zones 12 et 13 d'isolation thermique et de deux zones 14 et 15 qui localisent chacune un élément de maintien mécanique et d'interconnexion électrique. La zone 15 localise le premier élément de maintien mécanique et d'interconnexion électrique commun aux détecteurs Dij et Di+1j et la zone 14 localise le deuxième élément de maintien mécanique et d'interconnexion électrique commun aux détecteurs Di-1j-1, Di-1j, Dij et Dij-1.

Les détecteurs élémentaires voisins situés sur une même colonne se déduisent les uns des autres par symétrie d'ordre 2 par rapport à un axe perpendiculaire à l'axe défini par la colonne. Avantageusement, il est alors possible de réaliser des dispositifs d'isolation thermique 12 de même longueur pour chaque détecteur.

Selon un mode préféré de réalisation, les détecteurs thermiques élémentaires, les moyens de connexion des détecteurs thermiques élémentaires aux circuits de traitement et les circuits de traitement sont réalisés sur un même support. Les détecteurs thermiques élémentaires sont positionnés au-dessus des circuits de traitement afin d'accroître les capacités de détection. La technologie utilisée peut être la technologie dite "above IC" mentionnée précédemment ou la technologie d'hybridation par billes métalliques. Les éléments constitutifs des circuits de traitement sont alors fabriqués selon la technologie des circuits intégrés. A titre d'exemple non limitatif, les technologies CMOS (l'acronyme CMOS provient de l'anglais "Complementary Metal Oxyde Semiconductor"), BICMOS, bipolaire et autres technologies dérivées de ces technologies peuvent être utilisées.

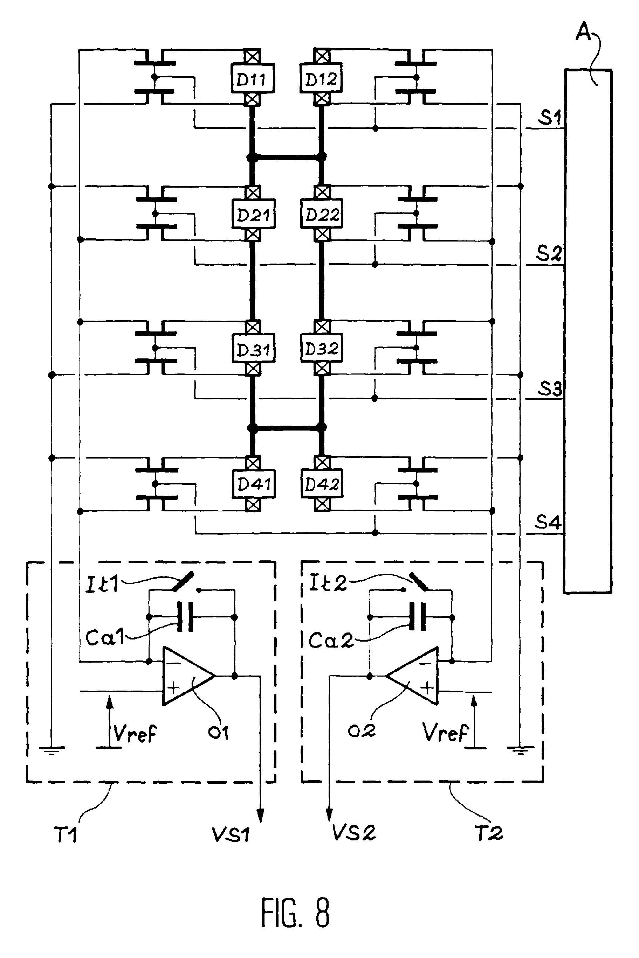

La figure 8 représente un schéma électrique d'un premier exemple de détecteur thermique selon le deuxième mode de réalisation de l'invention.

Selon l'exemple illustré en figure 8, les interrupteurs Iija et Iijb sont réalisés à l'aide de transistors MOS fonctionnant soit en régime bloqué, soit en régime ohmique. Des transistors bipolaires peuvent également être utilisés pour réaliser les interrupteurs. Le dispositif d'adressage A est un circuit numérique qui stimule à un instant donné une ligne et une seule parmi les lignes à balayer. Le circuit numérique peut être réalisé par un registre à décalage rebouclé, composé d'autant d'étages qu'il y a de lignes à adresser. Une autre solution consiste à concevoir un démultiplexeur à logique combinatoire de complexité $2^P$ vers P ou P est supérieur ou égal au nombre N de lignes à balayer.

Chaque circuit de traitement Tj (j=1, 2) comprend un moyen de mesure constitué, par exemple, d'un amplificateur opérationnel Oj à contre-réaction capacitive, d'une capacité Caj et d'un interrupteur Itj. La capacité Caj et l'interrupteur Itj sont montés en parallèle entre l'entrée inverseuse et la sortie de l'amplificateur opérationnel Oj. L'interrupteur Itj est utilisé pour réinitialiser la capacité Caj entre la lecture de deux lignes successives. Une tension de référence Vref est appliquée sur l'entrée non inverseuse de l'amplificateur Oj.

Selon le mode de réalisation illustré en figure 8, l'amplificateur opérationnel est à contre-réaction capacitive. L'invention concerne également le cas où l'amplificateur opérationnel est du type à contre-réaction résistive.

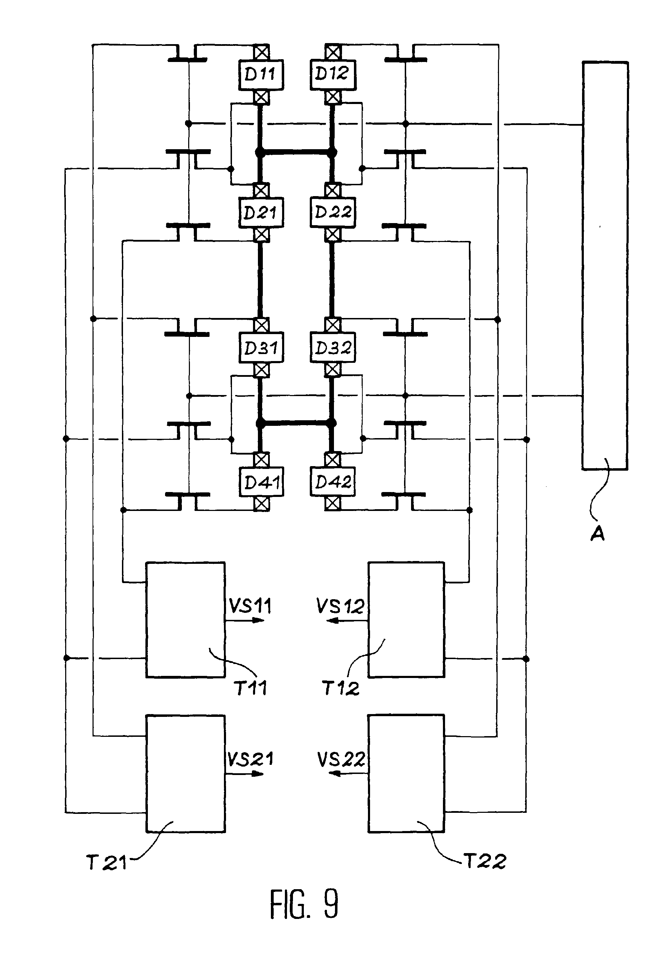

La figure 9 représente un schéma électrique d'une première variante de détecteur thermique selon le deuxième mode de réalisation de l'invention.

Le détecteur thermique comprend deux circuits de traitement par colonne de détecteurs élémentaires. Il est alors possible de lire simultanément deux lignes de détecteurs élémentaires.

A titre d'exemple non limitatif, les lignes paires de détecteurs élémentaires sont lues par un premier ensemble de circuits de traitement (T11 et T12) et les lignes impaires par un deuxième ensemble de circuits de traitement (T21 et T22). Un tel dispositif procède alors avantageusement à une lecture simultanée de deux lignes consécutives.

Les interrupteurs des lignes adjacentes qui sont traitées simultanément sont avantageusement commandés par une commande unique de ligne. Le dispositif d'adressage A qui génère le signal de commande réalise alors un décodeur $2^U$ vers U, où U est supérieur ou égal à la moitié des lignes de détecteurs à traiter.

L'interrupteur à deux transistors utilisé dans le dispositif selon la figure 8 est ici avantageusement remplacé par un interrupteur à un seul transistor.

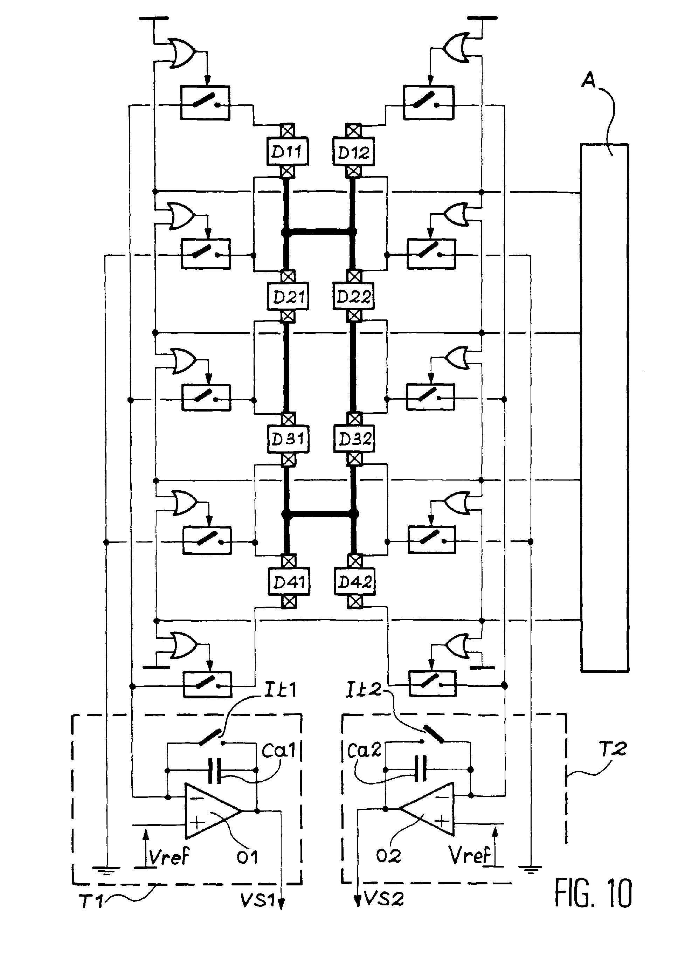

La figure 10 représente un schéma électrique d'une deuxième variante de détecteur thermique selon le deuxième mode de réalisation de l'invention.

Selon cette deuxième variante, les premiers moyens pour connecter ou déconnecter la première borne conductrice, d'un détecteur élémentaire au circuit de traitement sont constitués d'un interrupteur et d'un circuit logique OU. De même, les seconds moyens pour connecter ou déconnecter la deuxième borne conductrice d'un détecteur élémentaire au circuit de traitement sont également constitués d'un interrupteur et d'un circuit logique OU.

Avantageusement, selon cette deuxième variante, les bornes conductrices qui sont communes à deux détecteurs élémentaires voisins d'une même colonne sont reliées au même interrupteur et au même circuit logique OU. Un circuit logique OU comprend deux entrées et une sortie. Une entrée du circuit logique OU qui participe aux premiers moyens associés à un détecteur élémentaire est reliée à une entrée du circuit logique OU qui participe aux seconds moyens associés à ce même détecteur élémentaire, lesdites entrées étant elles-mêmes reliées à une même ligne de commande. Par ailleurs, chaque interrupteur est commandé par le signal de sortie du circuit logique OU qui lui est associé. Ainsi, selon le niveau logique du signal appliqué aux entrées des circuits logiques OU, est-il possible d'ouvrir ou de fermer simultanément les interrupteurs. Sur la figure 10, les circuits logiques OU sont représentés extérieurs au dispositif d'adressage A. Avantageusement, l'invention concerne également le cas où les circuits logiques OU sont intégrés au dispositif d'adressage.

Selon les modes de réalisation de l'invention décrits ci-dessus, le nombre de dispositifs de traitement est supérieur ou égal au nombre de colonnes du dispositif de détection.

L'invention concerne également les cas où le nombre de dispositifs de traitement est inférieur au nombre de colonnes du dispositif de détection. Dans une telle hypothèse, un même dispositif de traitement est commun à plusieurs colonnes et traite séquentiellement les détecteurs élémentaires des différentes colonnes. A la limite, un seul dispositif de traitement peut être utilisé pour l'ensemble de tous les détecteurs élémentaires d'un même dispositif de détection.

Dans une autre variante de réalisation de l'invention, un dispositif de traitement peut comprendre un moyen de mesure (Oj, Caj, Itj) commun à plusieurs détecteurs élémentaires et un point de référence électrique différent pour chaque détecteur élémentaire.

Moyennant des modifications mineures des dispositifs de traitement décrits ci-dessus, l'invention est applicable à des détecteurs thermiques délivrant une tension. C'est le cas, par exemple, des détecteurs résistifs polarisés en courant ou par une résistance.

Par ailleurs, outre les détecteurs bolométriques à micro-pont mentionnés ci-dessus, l'invention s'applique également, par exemple, aux détecteurs à diodes, aux détecteurs pyroélectriques ou aux détecteurs ferroélectriques.

**Revendications**

1. Dispositif de détection de rayonnement électromagnétique comprenant au moins deux détecteurs élémentaires (Dij), chaque détecteur élémentaire (Dij) comprenant une première borne conductrice (pija) et une deuxième borne conductrice (pijb) pour prélever un signal électrique représentatif du rayonnement détecté, le dispositif de détection comprenant des moyens de connexion électrique pour relier la première borne (pija) et la deuxième borne (pijb) d'un détecteur élémentaire (Dij) à un circuit de traitement (Tj) du signal électrique, caractérisé en ce que les moyens de connexion électrique comprennent des premiers moyens (Iija) pour connecter ou déconnecter la première borne conductrice du détecteur élémentaire (pija) à une première borne d'entrée du circuit de traitement et des seconds moyens (Iijb) pour connecter ou déconnecter la deuxième borne conductrice (pijb) du détecteur (Dij) à une deuxième borne d'entrée du circuit de traitement (Tj).

2. Dispositif de détection de rayonnement électromagnétique selon la revendication 1, caractérisé en ce que chaque détecteur élémentaire (Dij) est un détecteur thermique comprenant un micro-pont et un dispositif de maintien du micro-pont comprenant un premier élément de maintien sur lequel est disposée la première borne conductrice (pija) et un deuxième élément de maintien sur lequel est disposée la deuxième borne conductrice (pijb).

3. Dispositif de détection de rayonnement électromagnétique selon l'une quelconque des revendications 1 ou 2, caractérisé en ce qu'il est agencé sous la forme d'une matrice de N lignes x M colonnes de détecteurs thermiques élémentaires, les détecteurs d'une même colonne étant agencés de façon que deux détecteurs voisins d'une même colonne partagent un même élément de maintien et une même borne conductrice, l'élément de maintien commun partagé par les deux détecteurs voisins étant alternativement soit un premier élément de maintien, soit un deuxième élément de maintien

4. Dispositif de détection de rayonnement électromagnétique selon la revendication 3, caractérisé en ce que le deuxième élément de maintien commun de deux détecteurs voisins d'une colonne de rang impair j est commun avec le deuxième élément de maintien commun de deux détecteurs voisins de la colonne de rang pair j+1.

5. Dispositif de détection de rayonnement électromagnétique selon l'une quelconque des revendications précédentes, caractérisé en ce que les premiers moyens sont constitués d'un premier interrupteur et les seconds moyens d'un deuxième interrupteur, les premier et deuxième interrupteurs étant commandés par un même signal de commande.

6. Dispositif de détection de rayonnement électromagnétique selon l'une quelconque des revendications 3 ou 4, caractérisé en ce que les premiers et seconds moyens sont, chacun, constitués d'un interrupteur et d'un circuit logique OU, le circuit logique OU des premiers moyens ayant une entrée reliée à une entrée du circuit logique OU des seconds moyens, lesdites entrées étant reliées à une même ligne de commande, chaque interrupteur étant commandé par le signal de sortie du circuit logique OU qui lui est associé.

7. Dispositif de détection de rayonnement électromagnétique selon l'une quelconque des revendications 3 à 6, caractérisé en ce qu'il comprend un circuit de traitement par colonne de détecteurs pour lire simultanément les détecteurs d'une même ligne.

8. Dispositif de détection de rayonnement électromagnétique selon l'une quelconque des revendications 3 à 6, caractérisé en ce qu'il comprend au moins deux circuits de traitement par colonne pour lire simultanément les détecteurs d'au moins deux lignes.

9. Dispositif de détection de rayonnement électromagnétique selon l'une quelconque des revendications 3 à 6, caractérisé en ce qu'il comprend un même circuit de traitement pour plusieurs colonnes de façon à lire séquentiellement les détecteurs de différentes colonnes.

10. Dispositif de détection de rayonnement électromagnétique selon l'une quelconque des revendications 3 à 6, caractérisé en ce qu'il comprend un seul circuit de traitement pour l'ensemble des détecteurs de la matrice.

**11.** Dispositif de détection de rayonnement électromagnétique selon l'une quelconque des revendications 5 à 10, caractérisé en ce que les interrupteurs sont des transistors MOS ou bipolaires.

**12.** Dispositif de détection de rayonnement électromagnétique selon l'une quelconque des revendications précédentes, caractérisé en ce que les détecteurs élémentaires sont des détecteurs bolométriques ou des détecteurs à diodes ou des détecteurs pyroélectriques ou des détecteurs ferroélectriques.

FIG. 1

FIG. 2

FIG. 3

EP 1 106 980 A1

FIG. 4

FIG. 5

FIG. 6

FIG. 7

FIG. 8

FIG. 9

FIG. 10

Office européen
des brevets

**RAPPORT DE RECHERCHE EUROPEENNE**

Numéro de la demande

EP 00 40 3434

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | EP 0 354 369 A (TEXAS INSTRUMENTS INC) 14 février 1990 (1990-02-14) * abrégé; figures 2,4A * ----- | 1,2 | G01J5/20 G01J5/10 |

DOMAINES TECHNIQUES RECHERCHES (Int.Cl.7)

G01J
H04N
H01L

Le présent rapport a été établi pour toutes les revendications

| Lieu de la recherche | Date d'achèvement de la recherche | Examinateur |
|---|---|---|
| LA HAYE | 22 mars 2001 | De Buyzer, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**
EP 00 40 3434

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

22–03–2001

| Document brevet cité au rapport de recherche | Date de publication | Membre(s) de la famille de brevet(s) | Date de publication |
|---|---|---|---|
| EP 0354369 A | 14–02–1990 | DE 68923589 D | 31–08–1995 |
| | | DE 68923589 T | 18–01–1996 |
| | | JP 2196929 A | 03–08–1990 |
| | | JP 2834202 B | 09–12–1998 |
| | | KR 135119 B | 20–04–1998 |
| | | US 5021663 A | 04–06–1991 |

EPO FORM P0460

Pour tout renseignement concernant cette annexe : voir Journal Officiel de l'Office européen des brevets, No.12/82